# EUROPEAN PATENT APPLICATION

(11) **EP 1 430 961 A1**
(43) Date of publication of application: **23.06.2004**
(21) Application number: 03380299.2
(22) Date of filing: 19.12.2003
(51) Int. Cl.: B09B 3/00

(54) **Ash treatment process and corresponding installation**

(30) Priority: 20.12.2002 ES 200202940
(71) Applicant: Recuperacion de Energia S.A., 08038 Barcelona (ES)
(72) Inventor: Sanchez Santafé, Jesus Fernando, 08190-Sant Cugat del Vallés (Barcelona) (ES); Gimferrer Ambros, Esteve, 08296 Castellbell del Vilar (Barcelona) (ES)
(74) Representative: Curell Aguilà, Marcelino

(57) **Abstract**

Process for ash treatment and corresponding installation. The invention relates to the field of ash treatment, principally ash from an incinerator destined to be stored in a controlled dump. The treatment according to the invention comprises a step receiving the ash in a deposit (2), a step in which said ash is wetted and mixed, and a step in which said ash is compacted, waste or used water being capable of being employed in said wetting step. By means of said treatment a compact, shaped and packaged final product (23) is obtained, such that in said controlled dump the volume of ash is significantly reduced, whilst its handleability is improved, all of the above being performed without significant environmental impact since no form of gas, liquid or solid effluent is generated and residual water is used.

## Description

### Field of the invention

This invention relates to a process for treating ash from a waste incinerator and corresponding installation, of the type that allows adequate conditioning of said wastes before being transported and/or stored in a controlled dump.

### State of the art

In waste incinerator plants, the treatment of solid wastes produced by combustion is a very acute problem.

Said wastes are basically of two types: on one hand the cinder collected in the waste combustion oven and on the other hand the flying ash collected in the boiler and in the systems for treating combustion gases, these last including flying ash properly speaking, products from the gas treatment systems, excess of reagents used in said systems or active carbon/coke.

Said ash constitutes a special waste, abrasive, highly hygroscopic and with high content in heavy metals, which must be treated and/or stored in a safe dump.

There are different types of treatment for the ash produced in an incinerator, such as for example: cementation, washing with liquid and later treatment of said liquid or vitrification. However, normally, the final destination for this ash is a controlled dump.

Sundry treatments for this ash are known, treating it as special waste before its storage in a dump. As an alternative to direct dumping, the ash can be introduced into reinforced bags having large dimensions, commonly known as big-bags, which are vibrated to avoid the formation of air pockets; the absolute compactness of the bag is thus improved however not the intrinsic compactness of the waste. On occasions, the ash is sprayed with a small amount of water to avoid the dispersion of the dust, without however resulting in a significant increase in compactness. In another common treatment the ash is mixed with large amounts of water to obtain a fluid mix which is introduced into a mould with cement to form large blocks. This last treatment provides proper inertisation of the waste, but implies an increase in its specific volume and thus of the volume occupied in the dump.

The useful life of a controlled dump depends on its volumetric capacity and on the volume of waste received annually, and thus the high specific volume of this kind of waste is a problem.

None of the known treatment techniques described above succeed, nor aim at, a significant reduction of the volume of such waste. Rather, as refers to treatment by cementation, said volume is increased.

### Summary of the invention

The objective of the invention is to overcome this drawback. This aim is achieved by means of an ash treatment process of the type indicated at the beginning of the present specification, characterised in that it comprises:
- a step in which the ash is received in a deposit,
- a step in which said ash is wetted and mixed, and
- a step in which said ash is compacted.

Generally, incinerator ash means ash constituted by particles with a diameter less than approximately 1 mm. This ash can come from, in one respect, the flying ash collected in the boiler and in the combustion gas treatment systems and, on the other hand, from the pulverulent fraction of the cinder collected in the combustion oven, said pulverulent fraction having been obtained for example by means of a mechanical process applied to said cinder.

By means of the process according to the invention the ash volume is reduced and the space occupied by such in the dump is optimised, whilst simultaneously its handleability is improved. Additionally, the treatment according to the invention is carried out with no environmental impact, since it does not generate any kind of gas, liquid or solid by-product, and dispersion of the ash is avoided.

Preferably, in said step in which the ash is wetted and mixed the proportion ash/water is between 6:1 and 2:1 in weight, and more preferably between 4,5:1 and 3,5:1. In fact, despite ash produced in an incinerator having different origins and characteristics, laboratory testing has shown that on average ash compaction by means of the process according to the invention is optimal if in said wetting and mixing step water is added in the amount, by weight, of 1 part water for every 4 parts ash. The mixture of ash and water in said proportions has agglomerative properties and consequently, in wetting the ash, its volume reduces and a setting and hardening thereof takes place.

Advantageously, in said wetting and mixing step used water is employed, since in the ash wetting process according to the invention the water can be of any quality whatsoever, it can even be run-off water from industrial plant as long as the mechanical components of said process, such as pumps, nozzles and valves allow such use. The possibility of reusing waste water is a considerable advantage in an ash treatment process such as that of the present invention, since in a corresponding installation large quantities of waste water are generated, especially by the necessary equipment cleaning operations.

Advantageously, between said step in which the ash is received and said wetting and mixing step there is a step in which the ash is discharged into an apportioning hopper. Said hopper serves as buffer or lung, allowing the quantity of ash brought to the wetting and mixing step to be regulated in a precise manner. This regulation is an important part of the process, since it is responsible for controlling the ash/water ratio with enough precision, a parameter which as indicated above determines adequate compaction of the final product.

Preferably said discharge step is performed through a rotary feeder. Placing said feeder before the step of discharge to an apportioning hopper allows the flow of discharged ash to be controlled more efficiently and in particular has the objective of avoiding that the flow picks up speed should the ash acquire a fluidised state. In fact, under certain circumstances which depend on multiple factors relative to the installation and to the point of functioning of the same, it can occur that the ash, when being discharged from the receival deposit, acquires a fluidised state and its flow picks up speed in an uncontrollable manner. To prevent this problem there are various solutions, but installation of a rotary feeder is particularly efficient.

Advantageously, said intermediate step of discharge to an apportioning hopper can be done away with, so that said wetting and mixing step receives said ash directly from said deposit through a rotary feeder. This configuration is particularly advantageous, in supposing a notable simplification of the process. The rotary feeder has thus a double purpose: on one hand, it ensures precise regulation of the quantity of ash supplied to the wetting and mixing step, and on the other hand it guarantees that an avalanche does not occur should the ash reach a fluidised state.

Preferably, said compaction step is performed in removable containment and forming means. In this manner, the compacted product leaves the compaction step in a block having an appropriate shape for transport and storage in a controlled dump.

More preferably, said compaction step is carried out in a bag, of the kind that is reinforced and has large dimensions, or big-bag, such that upon exiting the compaction step, the compacted product, in addition to being formed, is directly packaged in said bag, easing its handling and later transport.

Advantageously, said compaction step is carried out on a vibrating table in order to avoid the formation of air pockets and thus facilitate said compaction operation. In this manner, an increase in the compactness of the final product is achieved with which, in addition, handling and transport is also facilitated since said final product deforms less and is more stable.

Preferably, said wetting and mixing step is continuous and said compaction step is discontinuous, and between said wetting step and said compaction step there is a transport step receiving said ash in a continuous manner from said wetting and mixing step and transporting it in a discontinuous manner to said compaction step. This transport step and transformation from a continuous process to a discontinuous process eases control of the subsequent compaction step, which thus receives the product in predetermined volumetric quantities that can be adjusted at any moment according to the requirements of the process.

The present invention also relates to an ash treatment installation for a waste incinerator which corresponds to the process according to the invention and its variants described above, and shares the same advantageous features thereof.

Thus, said installation comprises a storage deposit for said ash, a mixer for mixing said ash with water and a pressing chamber.

Additionally, advantageously, said installation comprises an apportioning hopper arranged between said storage deposit and said mixer. Preferably, said storage deposit and said apportioning hopper are connected to each other by means of a rotary feeder.

Alternatively, said storage deposit and said mixer are connected to each other by means of a rotary feeder.

Preferably, between said mixer and said pressing chamber there is a conveyor belt.

Finally, advantageously, said installation comprises a used-water storage reservoir connected to said mixer such that it is suitable for supplying used water to said mixer during said wetting and mixing step.

### Brief description of the drawings

Other advantages and features of the invention can be appreciated from the following description, relating in an entirely non-limitative manner some preferential embodiments of the invention, with reference to the attached drawings, in which:
figure 1, is a process diagram corresponding to an ash treatment process and installation according to a first embodiment of the invention;
figure 2, is a process diagram corresponding to an ash treatment process and installation according to a second embodiment of the invention; and
figure 3, is a process diagram corresponding to an ash treatment process and installation according to a third embodiment of the invention.

### Detailed description of some embodiments of the invention

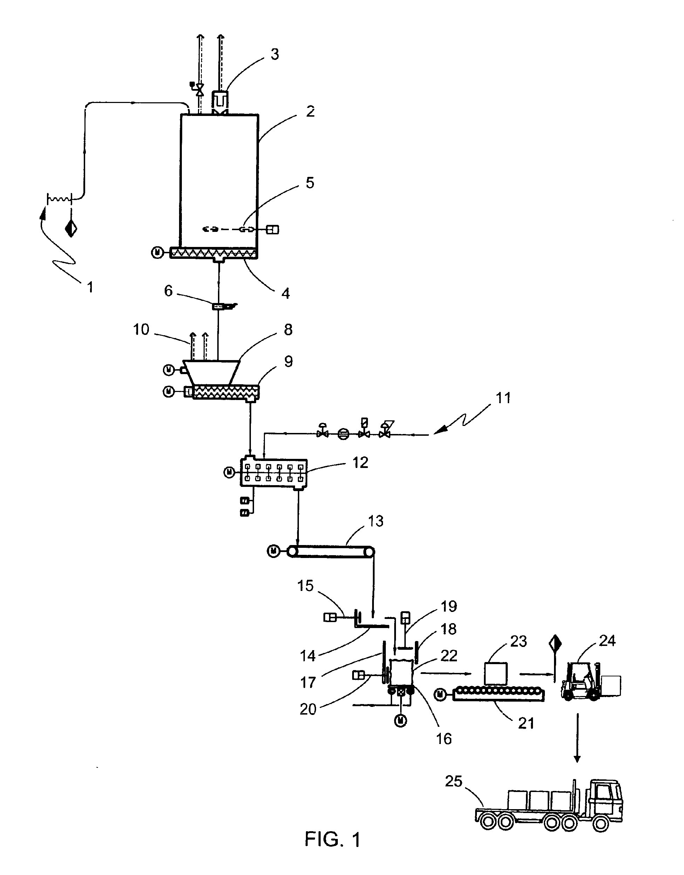

The first embodiment of the invention is illustrated diagrammatically by the process diagram of figure 1. For improved clarity in description, the following series steps can be distinguished:
A/ Receival and storage of the arrival ash. This step is carried out by means of a silo 2 in which the ash from an incinerator plant is discharged in bulk by means of a tank truck (not illustrated). The arrival ash is routed by means of a pneumatic system through an ash feed system 1 which has a connection hose and piping for ash introduction through the roof of said silo 2. Said silo 2 is provided in its upper part with an exit vent filter 3 which allows the expulsion of air without emitting ash into the atmosphere, a worm 4 for ash extraction and a base agitator 5 whose purpose is to avoid the formation of voids or air pockets. The ash is extracted from the silo 2 in a continuous manner by means of the worm 4 and falls by the effect of gravity in a closed duct toward the following step.
B/ Fine adjustment of the ash volumetric flow. The worm 4 which is incorporated in the silo 2 has as principal function the extraction of the ash from the base of said silo 2 and does not allow more than an approximate adjustment of the extracted flow. However, the wetting and compaction treatment according to the invention requires obtaining a given ratio in weight of the water/ash mix and thus precise control of the quantity of ash supplied is vitally necessary. This is the function of said step which finely adjusts the ash volumetric flow, which comprises a rate detector 6 and an apportioning hopper or expansion hopper 8 having a volumetric apportioner 9, which in the illustrated embodiment is a double worm, and a filter 10 which allows maintenance of the balance of pressures in the expansion hopper 8 without allowing ash to escape to the atmosphere. Alternatively, the expansion hopper 8 can have a respiratory duct with hydraulic seal (not illustrated) to avoid breakage of the filter 10 in the event of excess pressure and the consequent escape of ash to the atmosphere; said hydraulic seal can complement said filter 10 or could also replace such. The rate detector 6 activates an audio alarm in the event of not detecting ash flow and at the same time commands the automatic starting of a base raker (not illustrated) in silo 2. The fine adjustment of the ash flow is ensured by means of the volumetric apportioner 9 installed at the base of the expansion hopper 8.
C/ Wetting of the ash and mixing of the ash/water mixture. This step is carried out by means of a mixer-wetter 13 which receives on one side a continuous flow of ash regulated in the previous step and on the other side a continuous flow of water 11, also controlled, which can be water from a waste water supply system or a running water supply system, or a combination of both. The arrival water/ash ratio, in weight, at the mixer-wetter 12 is continuously controlled to have a value of 1:4. It should be understood that said ratio is not a fixed parameter, but rather an average value; the water/ash ratio is adjusted to a value which in practice is close to this average value and is such that a compacted final product is obtained having required characteristics that are substantially constant. The wetting of the ash is carried out by means of spray nozzles (not illustrated) arranged in the interior of the mixer-wetter 12, which has a shaft with paddles (not illustrated) to continually mix the water/ash mixture and discharge it in a continuous manner, by the effect of gravity, to the following step.
D/ Apportioning of discontinuous supply. The purpose of this step is to cut the continuous flow of the mixed mixture in order to apportion it into discontinuous units such that the following compaction and packaging step is consequently simple and reliable. This discontinuous supply apportioning step is carried out by means of a conveyor belt 13, a feed bin 14 and a thruster 15. The mixed mixture from the mixer-wetter 12 of the previous step is discharged in a continuous manner on the arrival end of said conveyor belt 13 and is discharged by its opposite exit end to a feed bin 14 provided with a thruster 15 which expulses the load to the subsequent step when said load has reached a given level. Said conveyor 13 acts in an intermittent manner, regulated by means of level detectors (not illustrated) so that it acts like a break accumulator between the previous continuous flow step and the subsequent discontinuous flow step.
E/ Compaction and packaging. This final step is carried out by means of an assembly comprising a vibrating table 16, a guide bin 17, a mould 18, a compactor ram 19, an ejector 20 and a roller track 21. The units of mixed mixture from the previous step fall by the effect of gravity in said guide bin, on said vibrating table 16, on which a reinforced big bag has been placed beforehand 22, and on which the mould 18, with a diameter slightly larger than that of said bag 22, has been lowered. Said mould 18 is placed exteriorly to said bag 22 to support it laterally and avoid its breakage by the pressure brought to bear during pressing. The mixed mixture thus contained is pressed by means of a compactor ram 19 until reaching a given pressure, after which the compactor ram 19 retreats and a new filling cycle is started, an operation which is repeated until said bag 22 is filled to the desired height. Subsequently, the mould 18 is lifted and the product thus compacted and packaged, i.e. the final product 23, is expulsed by means of the ejector 20 to the roller track 21 which routs it to a transport chain constituted conventionally by a pallet forklift 24 and a truck 25. The high compactness of the final product 23 is obtained thanks to the pressure exercised by the compactor ram 19 combined with the continuous vibrations of the table 16 whose function is to expunge the air cavities formed in the mixed mixture.

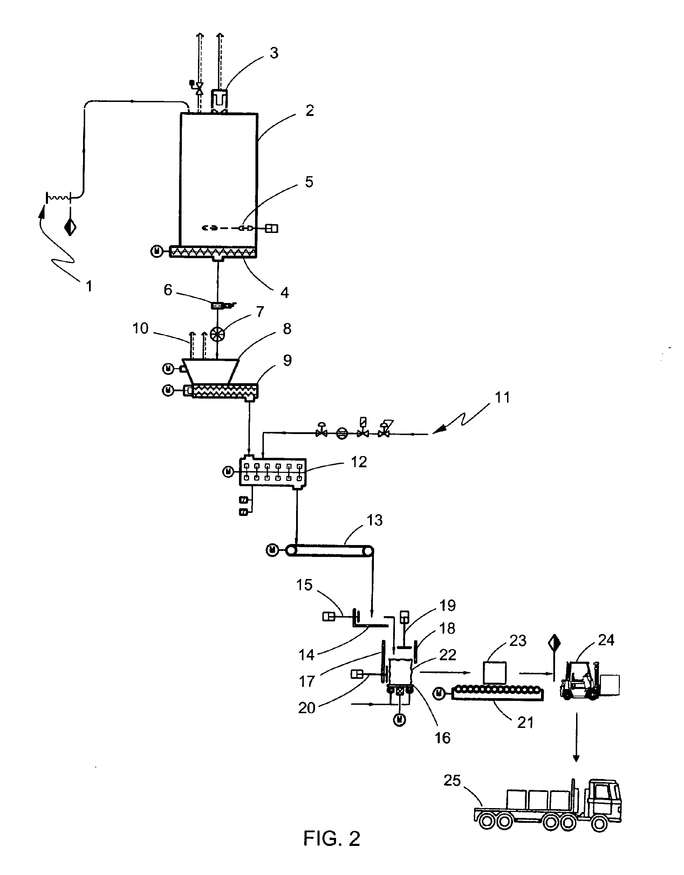

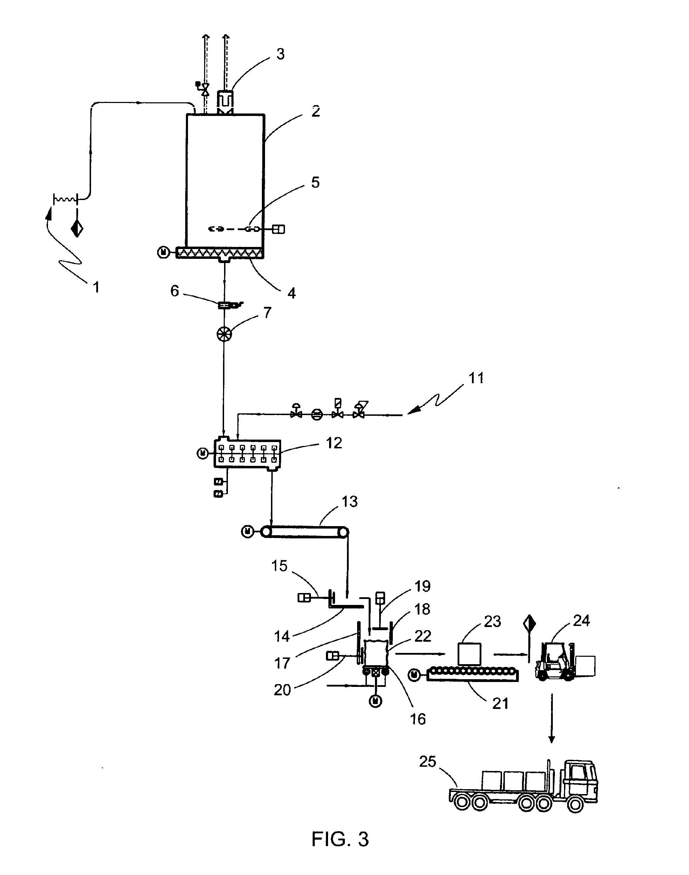

Figures 2 and 3 show two other preferred embodiments of the invention. An equivalent for all of the members shown in said figures can be found in figure 1, and said members are thus referenced with the same reference numbers.

The second embodiment of the invention illustrated diagrammatically by the process diagram of figure 2 consists in a variant of the first, in which a rotary feeder 7 has been introduced in the above step B/ for fine adjustment of the ash volumetric flow, just upstream of said expansion hopper 8. This rotary feeder 7 has the specific purpose of limiting the flow of ash to avoid an avalanche and a consequent uncontrolled emptying of said silo 2 if the ash adopts a fluidised state, since in this case the worm 4 of the silo 2 is not capable of either regulating nor retaining the flow of ash.

The third embodiment of the invention illustrated diagrammatically by the process diagram of figure 3 is a variant of the previous embodiment in which the expansion hopper 8 and the volumetric apportioner 9 have been eliminated. In this third embodiment, the rotary feeder 7 is such as permits fine adjustment of the ash flow. Thus, said feeder 7 has in this case the double function of avoiding an avalanche of ash should such reach a fluidised state and to finely adjust ash flow, the expansion hopper 8 and the volumetric apportioner 9 thus being unnecessary.

A possible variant of the above described embodiments consists in dispensing with the bags 22, the final product 23 being formed simply by the mould 18 and retaining said shape thanks to its high compactness. This variant adapts better to those cases in which one prefers to store only the compacted ash in the controlled dump, without other materials such as the constituents of said bags 23.

It should be emphasised that the utilisation of waste water in the installations corresponding to the embodiments described is important and allows in one respect the avoidance of any liquid effluent and in another respect economise running water. The water could for example have the following origins:
- leach collection basin of the controlled dump for storage of the compacted ash 23;
- water from the cleaning water reservoir (clean water),
- plant rain water and water produced by cleaning.

By way of non-limitative example, some features corresponding to the functioning of an installation corresponding to any one of the embodiments described are given below:
- arrival product 1: ash having a qualitative composition of CaCl₂/CaSO₄/CaCo₃/Ca(OH)₂/CaCO₃/NaOH and active carbon.
- water/ash ratio in the mixer-wetter 12: ratio of 1:4 in weight.
- apparent density on exiting the mixer-wetter 12 (non-compacted): between 0,5 and 0,8 Tn/m³.
- apparent density of the final product 23: between 1,2 and 1,8 Tn/m³.
- dimensions of final product 23: 0,960 x 0,990 x 1,10 m.
- force applied by the compactor ram 19: between 20 and 60 Tn.

## Claims

1. Process for treatment of ash from a waste incinerator **characterised in that** it comprises:
- a step in which the ash is received in a deposit (2),
- a step in which said ash is wetted and mixed, and
- a step in which said ash is compacted.

2. Process according to claim 1, **characterised in that** in said wetting and mixing step the ratio ash/water is between 6:1 and 2:1 in weight.

3. Process according to claim 2, **characterised in that** said ash/water ratio is between 4,5:1 and 3,5:1 in weight.

4. Process according to at least one of claims 1 to 3, **characterised in that** used water is employed in said wetting and mixing step.

5. Process according to at least one of claims 1 to 4, **characterised in that** between said receival step and said wetting and mixing step there is a step of discharge to an apportioning hopper (8).

6. Process according to claim 5, **characterised in that** said discharge step is carried out by means of a rotary feeder (7).

7. Process according to any of claims 1 to 4, **characterised in that** said wetting and mixing step receives said ash from said deposit (2) by means of a rotary feeder (7).

8. Process according to at least one of claims 1 to 7, **characterised in that** said compaction step is carried out in removable containment and forming means (18).

9. Process according to at least one of claims 1 to 8, **characterised in that** said compaction step is carried out in a bag (22) for packaging and transporting the compacted product.

10. Process according to at least one of claims 1 to 9, **characterised in that** said compaction step is carried out on a vibrating table (16).

11. Process according to at least one of claims 1 to 10, **characterised in that** said wetting and mixing step is continuous and said compaction step is discontinuous, and **in that** between said wetting step and said compaction step there is a transport step which receives said ash in a continuous manner proceeding from said wetting and mixing step and transports said ash in a discontinuous manner to said compaction step.

12. Installation for treatment of ash from a waste incinerator **characterised in that** it comprises a storage deposit (2) for said ash, a mixer (12) for mixing said ash with water and a pressing chamber (16, 17, 18, 19, 20).

13. Installation according to claim 12, **characterised in that** it additionally comprises an apportioning hopper (8) arranged between said storage deposit (2) and said mixer (12).

14. Installation according to claim 13, **characterised in that** said storage deposit (2) and said apportioning hopper (8) are connected to each other by means of a rotary feeder (7).

15. Installation according to claim 12, **characterised in that** said storage deposit (2) and said mixer (12) are connected to each other by means of a rotary feeder (7).

16. Installation according to at least one of claims 12 to 15, **characterised in that** between said mixer (12) and said pressing chamber (16, 17, 18, 19, 20) there is a conveyor belt (13).

17. Installation according to any of claims 1 to 16, **characterised in that** it comprises a storage reservoir for used water connected to said mixer (12) such that it is suitable for supplying used water to said mixer (12) during said wetting and mixing step.
